# FASCICULE DE BREVET EUROPEEN

(11) **EP 1 586 012 B1**
(45) Date de publication et mention de la délivrance du brevet: **21.02.2007**
(21) Numéro de dépôt: 03812604.1
(22) Date de dépôt: 08.12.2003
(51) Int. Cl.: G05B 19/418, G06F 17/40

(54) **SYSTEME DE SUIVI DE PRODUCTION ASSISTE PAR ORDINATEUR AVEC TRACABILITE DES DONNEES DE PRODUCTION**
COMPUTERGESTÜTZTES PRODUKTIONSVERFOLGUNGSSYSTEM MIT VERFOLGBARKEIT VON PRODUKTIONSDATEN
COMPUTER-ASSISTED PRODUCTION TRACKING SYSTEM WITH PRODUCTION DATA TRACEABILITY

(30) Priorité: 06.12.2002 FR 0215425
(43) Date de publication de la demande: 19.10.2005
(73) Titulaire: AVENSY, 25000 Besançon (FR)
(72) Inventeur: LABOURIER, Raphael, F-25000 Besançon (FR)
(74) Mandataire: Honoré, Anne-Claire
(86) Numéro de dépôt international: PCT/FR2003/003626
(87) Numéro de publication internationale: WO 2004/053607

(56) Documents cités:
- EP-A- 1 184 755
- FR-A- 2 814 260
- US-A- 6 081 899

## Description

La présente invention concerne un perfectionnement au système de suivi de production destiné à gérer un nombre variable de machines et à traiter les informations émises par lesdites machines en temps réel, ledit perfectionnement permettant d'assurer la traçabilité des données de la production en datant tous les évènements de production tels que la cadence, le changement d'état de la machine, le changement d'un opérateur, etc ...

Dans le domaine du suivi de production, on connaît bien des systèmes constitués d'un boîtier connecté à une ou plusieurs machines, - on entend par machine un équipement industriel de production qui peut être piloté par un équipement électrique traditionnel, un automate programmable ou une commande numérique -, ledit boîtier comprenant un clavier de saisie et un écran d'affichage de deux à huit lignes de caractères. Chaque boîtier comprend un microprocesseur dans lequel est enregistré un programme permettant d'effectuer le comptage des pièces produites par la machine connectée audit boîtier, de déterminer le mode de fonctionnement et d'enregistrer les défauts survenus sur la machine, le mode de fonctionnement et la saisie des défauts pouvant être effectués par l'opérateur à partir du clavier. Les informations de comptage des pièces, de mode de fonctionnement et de défauts permettent de déterminer les temps de fonctionnement de la machine dans chacun de ses modes de marche ainsi que les informations relatives à l'ordre de fabrication, ces dernières informations pouvant être lues soit au niveau du boîtier, soit sur un ordinateur du type PC connecté audit boîtier ; c'est ce que l'on appelle : suivi de production assistée par ordinateur ou SPAO.

Ces systèmes de SPAO comprenant de tels boîtiers présentent de nombreux inconvénients ; en effet, ces boîtiers comprennent généralement un nombre fini et limité d'entrées, c'est-à-dire un nombre limité de possibilités de connecter des machines, de sorte qu'il est difficile d'adapter un boîtier en fonction de l'évolution des besoins des utilisateurs, notamment lors d'une augmentation du nombre de machines ou d'une modification des machines où il est généralement nécessaire de changer les boîtiers qui sont particulièrement onéreux. Un autre inconvénient consiste dans le fait que les programmes de ces boîtiers sont réalisés en langage microprocesseur. Ce langage informatique est particulièrement complexe rendant ainsi une reprogrammation du boîtier difficile, longue et, par conséquent, onéreuse. Enfin, ces boîtiers présentent un temps de cycle supérieur ou égal à 100 ms qui, compte tenu des cadences des machines actuelles, ne permet pas de traiter toutes les informations provenant de toutes les machines connectées au boîtier.

Afin de remédier à ces inconvénients, on a déjà imaginé un système de suivi de production assisté par ordinateur d'un ou plusieurs ateliers ou lignes de production comprenant un système temps réel qui détermine les modes de fonctionnement de ladite machine et/ou les temps de fonctionnement dans chacun de ces modes ; c'est le cas, par exemple, de la demande de brevet français FR 2.814.260 qui décrit un système de suivi de production assisté par ordinateur. Le système de suivi de production est constitué d'au moins un système temps réel comprenant au moins une entrée connectée à au moins une machine et au moins une sortie connectée à au moins un serveur, ledit système temps réel comprenant un programme apte à recueillir des informations dites dynamiques émises par la machine et à déterminer le comptage de pièces et le temps de cycle ainsi que le temps de fonctionnement dans chacun de ces modes. A partir de ces informations, le programme déduit le mode de fonctionnement de la machine et le serveur met sous la forme de page "web" les informations du système temps réel pour les mettre à la disposition d'ordinateurs clients qui sont connectés au serveur par un réseau "Intranet" ou "Ethernet".

Le système temps réel consiste avantageusement dans un automate programmable ou dans la partie temps réel d'un ordinateur du type PC, ce qui permet une grande souplesse d'adaptation et le traitement de toutes les informations provenant des machines, le système temps réel présentant un temps de cycle inférieur à 20 ms. On observera, par ailleurs, que l'automate programmable ou une partie temps réel d'un ordinateur PC peut accueillir un nombre variable d'entrées, c'est-à-dire de connexions à des machines, et utilise des langages de programmation faciles à manier de sorte qu'il n'est pas nécessaire de changer le système de suivi de production lors des évolutions de la production, comme par exemple d'ajouter de nouvelles machines ; il suffit simplement de le reprogrammer.

Toutefois, ce système de suivi de production présente l'inconvénient de ne pas permettre aux utilisateurs d'assurer la traçabilité de leur production.

L'un des buts de l'invention est donc de remédier à ces inconvénients en proposant un nouveau système de suivi de production assisté par ordinateur permettant d'assurer la traçabilité de la production, c'est-à-dire de dater tous les évènements de la production tels que la cadence, le changement d'état de la machine, un changement d'opérateur, les lots de matière, les interventions de maintenance, les ordres de fabrication, les mesures de température, de pression, etc ..., fiable, facilement adaptable aux évolutions des machines ou des informations nécessaires pour le suivi de la production et peu onéreux.

A cet égard et conformément à l'invention, il est proposé un système de suivi de production assisté par ordinateur d'un ou plusieurs ateliers ou lignes de production comprenant respectivement une ou plusieurs machines, constitués d'au moins un système temps réel "primaire" comprenant au moins une entrée connectée à au moins une machine et/ou à au moins un système temps réel "secondaire' de la ou des machines et au moins une sortie connectée à au moins un serveur, ledit système temps réel "primaire" et/ou le système temps réel "secondaire" comprenant un programme apte à déterminer le mode de fonctionnement de ladite machine et/ou le temps de fonctionnement dans chacun de ces modes à partir des informations dynamiques transmises par la machine et/ou le système temps réel "secondaire", le serveur mettant sous la forme de pages "web" les informations du système temps réel "primaire" pour les mettre à la disposition d'ordinateurs clients des différents services production, qualité ou analogue qui sont connectés au serveur par un réseau "Intranet" ou "Ethernet" et équipés de navigateur "web" dits "browser" pour lire lesdites pages "web" ; ledit système est remarquable en ce que le système temps réel "primaire" et/ou "secondaire" comprend un programme apte à attribuer à chaque information dynamique qu'il reçoit une date et une heure puis à enregistrer ces informations horodatées dans au moins un premier fichier dit d'horodatage de telle sorte que le serveur puisse mettre ces informations horodatées à la disposition des ordinateurs clients sous la forme d'une ou plusieurs pages "web".

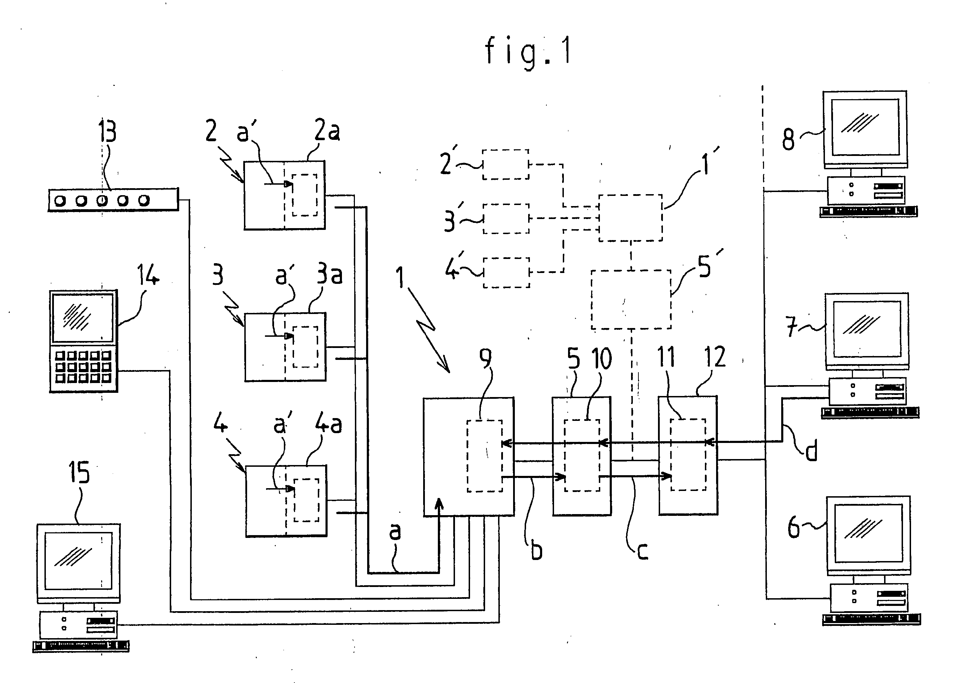

D'autres avantages et caractéristiques ressortiront mieux de la description qui va suivre, de plusieurs variantes d'exécution, données à titre d'exemples non limitatifs, du système de suivi de production assisté par ordinateur en référence à la figure unique qui est une représentation schématique du système de suivi de production assisté par ordinateur conforme à l'invention.

Le système de suivi de production est constitué d'un système temps réel "primaire" 1 comprenant plusieurs entrées respectivement connectées à une machine 2,3 et 4 et au moins une sortie connectée à un serveur 5. Le système temps réel "primaire" 1 comprend un programme apte à déterminer le temps de cycle de chaque machine 2,3,4 à partir d'une prise d'informations du type "Tout Ou Rien" ou TOR telle que les informations de comptage des pièces prises sur les machines. L'information de comptage qui, sur la machine, consiste dans une impulsion électrique est transformée en une information dite dynamique binaire du type 0 ou 1. qui permet au programme du système temps réel "primaire" 1 de déterminer le comptage des pièces et le temps de cycle, puis d'en déduire les modes de fonctionnement de ladite machine, par exemple : la première information du cycle donne le mode réglage, un mode automatique est déduit au bout d'un certain nombre de temps de cycle et un mode arrêt est déduit- après l'absence d'impulsions pendant un nombre de cycles prédéterminé. A partir de ces informations dites dynamiques, le programme du système temps réel "primaire" 1 détermine, par ailleurs, le temps de fonctionnement de la machine dans chacun des modes décrits précédemment.

Il est bien évident que le mode de fonctionnement peut être déterminé directement soit par la machine 2, 3 ou 4, soit par un opérateur. Les informations dynamiques reçues par le système temps réel "primaire" 1 ainsi que les informations dynamiques qui en sont déduites sont transmises au serveur 5 qui met sous la forme de pages "web", c'est-à-dire sous la forme de fichiers informatiques d'extension .html ou analogue, pour les mettre à la disposition des ordinateurs clients 6,7 et 8 des différents services production, qualité ou analogue qui sont connectés au serveur 5 par un réseau "Intranet" ou "Ethernet" et équipés de navigateur "web" communément appelés "browsers", tels que "Netscape" ou "Internet Explorer" qui sont des marques déposées, pour lire lesdites pages "web".

Il est bien évident que les pages "web" du serveur 5 peuvent être lues par n'importe quel "browser" et ce, quels que soient les systèmes d'exploitation des ordinateurs clients susceptibles de les lire.

Par ailleurs, il va de soi que les "browsers" des ordinateurs clients 6,7,8 peuvent être substitués par une application qui génère un écran contenant les informations demandées par l'ordinateur client 6,7,8. On entend par application un programme d'ordinateur tel qu'un exécutable, un programme JAVA (marque déposée) ou analogue.

Les pages "web" mises à la disposition des ordinateurs clients 6,7,8 par le serveur "web" 5 ou les écrans générés par l'application consistent par exemple dans des graphiques, des histogrammes, des courbes, dés "camemberts", etc ...

Selon une première variante d'exécution du système de suivi de production conforme à l'invention, le système temps réel "primaire" 1 comprend un programme apte à attribuer à chaque information dynamique transmise par la ou les machines 2,3,4, comme l'indique la flèche a, une date et une heure et à enregistrer ces informations horodatées dans un premier fichier' dit d'horodatage 9. Ce fichier d'horodatage 9 consiste avantageusement dans un fichier dit dynamique, c'est-à-dire un.fichier informatique de taille constante dans lequel des informations peuvent être enregistrées les unes à la suite des autres. Les informations contenues dans ce premier fichier d'horodatage 9 sont alors transmises au serveur 5, comme l'indique la flèche b qui met à la dispositions des ordinateurs 6,7, et 8 sous la forme de page "web" ces informations horodatées. Le premier fichier d'horodatage 9 contenant les informations horodatées est transmis au serveur 5 à intervalles réguliers afin d'enregistrer lesdites informations horodatées dans un second fichier dit d'horodatage 10. Le contenu du second fichier d'horodatage 10 du serveur 5 est avantageusement enregistré dans une base de données 11, comme l'indique la flèche c, à intervalles réguliers offrant des capacités de mémoire et de traitement des informations plus importante. En effet, la capacité en mémoire du serveur 5 correspond environ à une semaine de données collectées, ce qui n'est pas toujours suffisant pour un suivi de la production perfectionné qui nécessite parfois, de comparer la production d'un mois par rapport à un autre. Cette base de données 11 est enregistrée sur un serveur "Intranet" 12 connecté entre le serveur de pages "web" 5 et les ordinateurs clients 6 et 7. Lorsque l'ordinateur client 7, par exemple, se connecte au serveur 5, ledit serveur 5 met à la disposition dudit ordinateur 7, sous la forme de pages "web", les informations horodatées provenant du premier fichier d'horodatage 9 et/ou du second fichier d'horodatage 10 et/ou des informations horodatées enregistrées dans la base de données 11 en fonction du besoin de l'ordinateur client 7, comme l'indique la flèche d.

Il va de soi que le premier fichier d'horodatage 9 contenant les informations horodatées peut être transmis au serveur 5 lorsque ledit premier fichier 9 atteint une taille critique prédéterminée, afin d'enregistrer lesdites informations horodatées dans le second fichier d'horodatage 10 et que le contenu du second fichier d'horodatage 10 du serveur 5 peut être enregistré dans la base de données lorsque ledit fichier d'horodatage 10 atteint une taille critique prédéterminée sans pour autant sortir du cadre de l'invention.

Par ailleurs, à l'issue de l'enregistrement du contenu du second fichier d'horodatage 10 dans la base de données 11, ledit contenu du second fichier d'horodatage 10 est effacé afin de permettre l'enregistrement de nouvelles données dans ledit second fichier d'horodatage 10.

Selon une variante d'exécution du système conforme à l'invention, les machines 2, 3 et 4 comprennent avantageusement des systèmes temps réel dits "secondaires" respectivement 2a,3a et 4a connectés en réseau à l'entrée du système temps réel "primaire" 1. De la même manière que précédemment, les systèmes temps réel "secondaires" 2a,3a et 4a comprennent respectivement un programme apte à déterminer le comptage de pièces et/ou le temps de cycle à partir d'une prise d'informations binaires telle que l'information de comptage des pièces prise sur les machines 2, 3 et 4, comme l'indique les flèches a' , puis à en déduire le mode de fonctionnement desdites machines 2, 3 et 4 et/ou le temps de fonctionnement dans chacun des cycles. On observera ainsi que les systèmes temps réel "secondaires" 2a, 3a et 4a effectuant une partie des traitements des informations, le système temps réel "primaire" 1 est libéré d'une partie desdits traitements, ce qui permet de connecter audit système temps réel "primaire" 1 un plus grand nombre de machines comprenant un système temps réel "secondaire" ou non tout en conservant un temps de cycle de traitement des données inférieur à 20 ms. Les systèmes temps réel "secondaires" 2a, 3a et 4a transmettent, comme l'indique la flèche a, ces informations dynamiques au système temps réel "primaire" 1 qui comprend, de la même manière que précédemment, un programme apte à attribuer à chaque information dynamique émise par les systèmes temps réel "secondaires" 2a, 3a et 4a une date et une heure et à enregistrer ces informations dans le premier fichier dit d'horodatage 9, le serveur 5 mettant à la disposition des ordinateurs client 6, 7 et 8 sous la forme de pages "web" ces informations horodatées. De la même manière que précédemment, le premier fichier d'horodatage 9 contenant les informations horodatées est transmis au serveur 5 à intervalles réguliers afin d'enregistrer lesdites-informations horodatées dans un second fichier dit d'horodatage 10 dont le contenu est avantageusement enregistré dans une base de données 11 à intervalles réguliers.

Selon une autre variante d'exécution du système conforme à l'invention, le système temps réel "secondaire" 2a,3a,4a comprend respectivement un programme apte à attribuer à chaque information dynamique transmise par la machine 2, 3 et respectivement 4 une date et une heure et enregistrer ces informations dans le système temps réel "secondaire" 2a,3a,4a dans le premier dit d'horodatage 9. Ce premier fichier d'horodatage 9 est alors transmis au serveur 5 à intervalles réguliers afin d'enregistrer lesdits informations horodatées dans le second fichier dit d'horodatage 10 dont le contenu est avantageusement enregistré dans une base de données 11 à intervalles réguliers, une copie du premier fichier d'horodatage 9 pouvant accessoirement être enregistré sur le système temps réel "primaire" 1.

Accessoirement le système de suivi de production assisté par ordinateur comprend, par ailleurs, un boîtier de commande 13 connecté au système temps réel "primaire" 1 positionné à côté de la machine 2 afin de procurer des informations dynamiques complémentaires telles que, par exemple, une cause d'arrêt relative à ladite machine 2. Le système de suivi de production comprend avantageusement un ou plusieurs pupitres opérateurs 14, dont un seul est représenté sur la figure à côté de la machine 3, connecté au système temps réel "primaire" 1 et constitué, par exemple, d'un écran d'affichage de 16 caractères et d'un clavier. Ce pupitre opérateur 14 permet à l'opérateur de la machine 3 de saisir une cause d'arrêt et, éventuellement, d'afficher ou de saisir les quantités rebutées par ladite machine, les ordres de fabrication ou les références ou toutes autres informations dynamiques.

Il est bien évident que le pupitre opérateur 14 peut avantageusement consister dans un lecteur de code barres connecté au système temps réel "primaire" 1 par une liaison filaire ou radio.

De plus, ce pupitre opérateur 14 peut également consister dans un simple écran tactile.

On notera, enfin, que le boîtier de commande 13 et le pupitre 14 peuvent être connectés aux systèmes temps réels "secondaires" 2a,3a,4a sans sortir du cadre de l'invention.

Le système temps réel "primaire" consiste, par exemple, dans un automate programmable comprenant classiquement un châssis enfermant un bloc d'entrée et sortie et une unité centrale communément appelée CPU qui est l'abréviation de Control Process Unity, le bloc d'entrée et sortie, l'unité centrale et un coupleur étant connectés au châssis afin de permettre le transfert d'informations entre le bloc d'entrée et sortie et l'unité centrale notamment.

Selon une variante d'exécution du système de suivi de production conforme à l'invention, le système temps réel "primaire" 1 peut consister dans la partie temps réel d'un ordinateur du type PC tel que du hardware c'est-à-dire du matériel informatique, ou du software, c'est-à-dire un logiciel, et un bloc d'entrée et sortie.

Selon une dernière variante d'exécution du système de suivi de production assistée par ordinateur, ce dernier comprend avantageusement un client léger 15 connecté au serveur "web" 5 ou au serveur "Intranet" 12 positionnés à côté de la machine 4 permettant à son opérateur de saisir les causes de ladite machine 4 et d'afficher des informations relatives à la production en cours, des fiches de qualité, de production, de montage, de réglage, de maintenance ou des plans, des photos, etc ... Ce client léger 15 consiste dans un ordinateur du type PC ne possédant pas de disque dur, c'est-à-dire un ordinateur comprenant un écran, un clavier et une unité centrale constituée d'une carte mère et de cartes pour la connexion des périphériques, telles qu'une carte vidéo, une carte son, etc ... Par ailleurs, ce client léger 15 permet aux opérateurs de modifier certains paramètres du programme du serveur 5 tels que, par exemple, le temps de cycle théorique d'une machine ou le nombre théorique de pièces par cycle. De plus, les informations dynamiques transmises au serveur "web" 5 sont alors directement enregistrées dans le second fichier d'horodatage 10.

Il va de soi que le système de suivi de production assisté par ordinateur peut avantageusement comprendre des dispositifs de mesure analogique positionnés sur les machines 2,3 et 4 et reliés au système temps réel "primaire" 1 afin, par exemple, de contrôler la qualité des pièces et éventuellement de les trier. Les informations dynamiques émises par ce dispositif de mesure analogique sont ainsi transmises au système temps réel "primaire" 1, puis horodatées, puis transmises au serveur 5 qui les met à la disposition des ordinateurs clients 6,7 et 8 sous la forme de pages "web".

Par ailleurs, le système de suivi de production peut avantageusement comprendre un ou plusieurs systèmes temps réel "primaires complémentaires" 1' sur les entrées duquel sont connectées des machines 2', 3' et 4' qui sont reliées à un second serveur de pages "web" 5', les serveurs 5 et 5' étant en réseau.

Enfin, il va de soi que le système de suivi de production assisté par ordinateur peut être adapté à tous les types de machines telles que des machines à commandes numériques, par exemple, et que les exemples que l'on vient de donner ne sont que des illustrations particulières en aucun cas limitatives des domaines d'application de l'invention.

## Revendications

1. - Système de suivi de production assisté par ordinateur d'un(e) ou plusieurs ateliers ou lignes de production comprenant respectivement une ou plusieurs machines (2,3,4) constitués d'au moins un système temps réel "primaire" (1,1') comprenant au moins une entrée connectée à au moins une machine(2,3,4) et/ou à au moins un système temps réel "secondaire" (2a,3a,4a) de la ou des machines (2,3,4) et au moins une sortie connectée à au moins un serveur (5,5'), ledit système temps réel "primaire" (1,1') et/ou le système temps réel "secondaire" (2a,3a,4a) comprenant un programme apte à déterminer le mode de fonctionnement de ladite machine (2,3,4) et/ou le temps de fonctionnement dans chacun de ces modes à partir des informations dynamiques transmises par la machine (2,3,4) et/ou le système temps réel "secondaire" (2a,3a,4a), le serveur (5,5') mettant les informations à la disposition d'ordinateurs clients (6,7,8) des différents services production, qualité ou analogues qui sont connectés au serveur (5,5') par un réseau "Intranet" ou "Ethernet" ; ledit système est **caractérisé en ce que** le système temps réel "primaire" (1,1') et/ou secondaire (2a,3a,4a) comprend un programme apte à attribuer à chaque information dynamique qu'il reçoit une date et une heure, puis à enregistrer ces informations dans au moins un premier fichier dit d'horodatage (9) de telle sorte que le serveur (5,5') puisse mettre ces informations horodatées à la disposition des ordinateurs clients (6,7,8).

2. - Système de suivi de production assisté par ordinateur selon la revendication précédente **caractérisé en ce que** les informations reçues par les systèmes temps réels "primaires" (1,1') et/ou "secondaires" (2a,3a,4a) consistent dans des informations dynamiques transmises par les machines (2,3,4) et/ou par les systèmes temps réels "secondaires" (2a, 3a, 4a) et/ou au moins un logiciel de suivi de production assisté par ordinateur ou analogues.

3. - Système de suivi de production assisté par ordinateur selon l'une quelconque des revendications 1 ou 2 **caractérisé en ce que** les informations reçues par les systèmes temps réels "primaires" (1,1') et/ou "secondaires" (2a,3a,4a) consistent dans des informations dynamiques transmises par un boîtier de commande (13) et/ou par un pupitre opérateur (14) et/ou par des dispositifs de mesure analogique connectés au système temps réel "primaire" (1,1') ou "secondaires" (2a,3a,4a) et/ou par un client léger (15) connecté au serveur "web" (5,5').

4. - Système de suivi de production assisté par ordinateur selon la revendication 3 **caractérisé en ce que** le premier fichier d'horodatage (9) contenant les informations horodatées est transmis au serveur (5,5') à intervalles réguliers afin d'enregistrer lesdites informations horodatées dans un second fichier dit d'horodatage (10).

5. - Système de suivi de production assisté par ordinateur selon l'une quelconque des revendications 1 ou 2 **caractérisé en ce que** le premier fichier d'horodatage (9) contenant les informations horodatées est transmis au serveur (5,5') lorsque ledit fichier (9) atteint une taille critique pré-déterminée, afin d'enregistrer lesdites informations horodatées dans un second fichier dit d'horodatage (10).

6. - Système de suivi de production assisté par ordinateur selon l'une quelconque des revendications 1 à 3 **caractérisé en ce que** le contenu du second fichier d'horodatage (10) du serveur (5,5') est enregistré dans une base de données à intervalles réguliers.

7. - Système de suivi de production assisté par ordinateur selon l'une quelconques des revendications 1 à 3 **caractérisé en ce que** le contenu du second fichier d'horodatage (10) du serveur (5,5') est enregistré dans une base de données (11) lorsque ledit fichier d'horodatage (10) atteint une taille critique prédéterminée.

8. - Système de suivi de production assisté par ordinateur selon l'une quelconque des revendications 4 ou 5 **caractérisé en ce que**, à l'issue de l'enregistrement du contenu du second fichier d'horodatage (10) dans la base de données (11), ledit contenu du second fichier d'horodatage (10) est effacé afin de permettre l'enregistrement de nouvelles données dans ledit second fichier d'horodatage (10).

9. - Système de suivi de production assisté par ordinateur selon l'une quelconque des revendications 4 à 6 **caractérisé en ce que**, lorsqu'un ordinateur client (6,7,8) se connecte au serveur (5,5'), ledit serveur (5,5') met à la disposition de l'ordinateur client (6,7,8) sous la forme de pages "web" des informations horodatées provenant du premier fichier d'horodatage (9) et/ou du second fichier d'horodatage (10) et/ou de la base de données (11).

10. - Système de suivi de production assisté par ordinateur selon l'une quelconque des revendications 4 à 7 **caractérisé en ce que** la basse de données (11) est enregistrée sur un serveur "Intranet" (12) connecté au serveur (5,5').

11. - Système de suivi de production assisté par ordinateur selon l'une quelconque des revendications précédentes **caractérisé en ce que** le ou les ordinateurs clients (6,7,8) comprennent une application qui génère un écran et/ou une page "web" contenant les informations demandées par l'ordinateur client (6,7,8).

## Claims

1. A computer-assisted production monitoring system for one or more workshops or production lines respectively comprising one or more machines (2, 3, 4) consisting of at least one primary real time system (1, 1') comprising at least one input connected to at least one machine (2, 3, 4) and/or to at least one secondary real time system (2a, 3a, 4a) of the machine(s) (2, 3, 4) and at least one output connected to at least one server (5, 5'), said primary real time system (1, 1') and/or said secondary real time system (2a, 3a, 4a) comprising a program capable of determining the operating mode of said machine (2, 3, 4) and/or the operating time in each of these modes from dynamic information transmitted by the machine (2, 3, 4) and/or the secondary real time system (2a, 3a, 4a), the server (5, 5') making the information available to client computers (6, 7, 8) of the different production, quality departments or the like which are connected to the server (5, 5') via an Intranet or Ethernet network; said system is **characterized in that** the primary (1, 1') and/or secondary (2a, 3a, 4a) real time system comprises a program capable of assigning to each piece of dynamic information which it receives, a date and time, and then of recording this information in at least a first so-called time stamp file (9) so that the server (5, 5') may make this time stamped information available to the client computers (6, 7, 8).

2. The computer-assisted production monitoring system according to the preceding claim, **characterized in that** the information received by the primary (1, 1') and/or secondary (2a, 3a, 4a) real time systems consists in dynamical information transmitted by the machines (2, 3, 4) and/or by the secondary real time systems (2a, 3a, 4a) and/or at least one computer-assisted production monitoring software package or the like.

3. The computer-assisted production monitoring system according to any of claims 1 or 2, **characterized in that** the information received by the primary (1, 1') and/or secondary (2a, 3a, 4a) real time systems consists in dynamic information transmitted by a control box (13) and/or an operator console (14) and/or by analogue measurement devices connected to the primary (1, 1') or secondary (2a, 3a, 4a) real time system and/or by a lightweight client (15) connected to the web server (5, 5').

4. The computer-assisted production monitoring system according to claim 3, **characterized in that** the first time stamp file (9) containing time stamped information is transmitted to the server (5, 5') at regular intervals in order to record said time stamped information in a second so-called time stamp file (10).

5. The computer-assisted production monitoring system according to any of claims 1 or 2, **characterized in that** the first time stamp file (9) containing time stamped information is transmitted to the server (5, 5') when said file (9) reaches a predetermined critical size, in order to record said time stamped information in a second so-called time stamp file (10).

6. The computer-assisted production monitoring system according to any of claims 1 to 3, **characterized in that** the contents of the second time stamp file (10) of the server (5, 5') is recorded in a database at regular intervals.

7. The computer-assisted production monitoring system according to any of claims 1 to 3, **characterized in that** the contents of the second time stamp file (10) of the server (5, 5') is recorded in a database (11) when said time stamp file (10) reaches a predetermined critical size.

8. The computer-assisted production monitoring system according to any of claims 4 or 5, **characterized in that**, upon completion of the recording of the contents of the second time stamp file (10) in the database (11), said contents of the second time stamp file (10) are deleted in order to allow new data to be recorded in said second time stamp file (10).

9. The computer-assisted production monitoring system according to any of claims 4 to 6, **characterized in that**, when a client computer (6, 7, 8) connects to the server (5, 5'), said server (5, 5') makes available to the client computer (6, 7, 8) as web pages, time stamped information from the first time stamp file (9) and/or from the second time stamp file (10) and/or from the database (11).

10. The computer-assisted production monitoring system according to any of claims 4 to 7, **characterized in that** the database (11) is recorded on an Intranet server (12) connected to the server (5, 5').

11. The computer-assisted production monitoring system according to any of the preceding claims, **characterized in that** the client computer(s) (6, 7, 8) comprise an application which generates a screen and/or a web page containing the information requested by the client computer (6, 7, 8).

## Patentansprüche

1. Computergestütztes System zur Überwachung des Produktionsablaufs einer oder mehrerer Werkhallen oder Produktionslinien, umfassend jeweils eine oder mehrere Maschinen (2, 3, 4), das von mindestens einem "primären" Echtzeitsystem (1, 1') gebildet wird, umfassend mindestens einen Eingang, der mit mindestens einer Maschine (2, 3, 4) und/oder mindestens einem "sekundären" Echtzeitsystem (2a, 3a, 4a) der Maschine/n verbundenen ist, und mindestens einen Ausgang, der mit mindestens einem Server (5, 5') verbunden ist, wobei das besagte "primäre" Echtzeitsystem (1, 1') und/oder das "sekundäre" Echtzeitsystem (2a, 3a, 4a) ein Programm zur Bestimmung des Betriebsmodus' der besagten Maschine (2, 3, 4) und/oder der Betriebszeit in jedem dieser Modi ausgehend von dynamischen Informationen, die von der Maschine (2, 3, 4) und/oder dem "sekundären" Echtzeitsystem (2a, 3a, 4a) übermittelt werden, umfasst, wobei der Server (5, 5') die Informationen Clientrechnern (6, 7, 8) der verschiedenen Produktionsabteilungen, der Qualitätsabteilung oder ähnlichen, die mit dem Server (5, 5') verbunden sind, über ein "Intranet"- oder ein "Ethernet"-Netz zur Verfügung stellt; wobei das besagte System **dadurch gekennzeichnet ist, dass** das "primäre" (1, 1') und/oder das "sekundäre" Echtzeitsystem ((2a, 3a, 4a) ein Programm umfasst, das in der Lage ist, jeder dynamischen Information, die es erhält, ein Datum und eine Uhrzeit zuzuordnen, danach diese Informationen in mindestens einer ersten, Zeitdatei (9) genannten Datei zu speichern, so dass der Server (5, 5') diese Zeitinformationen den Clientrechnern (6, 7, 8) zur Verfügung stellen kann.

2. Computergestütztes System zur Überwachung des Produktionsablaufs nach dem vorhergehenden Anspruch, **dadurch gekennzeichnet, dass** die von den "primären" (1, 1') und/oder "sekundären" (2a, 3a, 4a) Echtzeitsystemen empfangenen Informationen aus dynamischen Informationen bestehen, die von den Maschinen (2, 3, 4) und/oder den "sekundären" Echtzeitsystemen (2a, 3a, 4a) und/oder mindestens einer Software zur computergestützten Überwachung des Produktionsablaufs oder ähnlichem übertragen werden.

3. Computergestütztes System zur Überwachung des Produktionsablaufs nach einem der Ansprüche 1 oder 2, **dadurch gekennzeichnet, dass** die von den "primären" (1, 1') und/oder "sekundären" (2a, 3a, 4a) Echtzeitsystemen erhaltenen Informationen aus dynamischen Informationen bestehen, die von einer Steuereinheit (13) und/oder von einem Bedienpult (14) und/oder von analogen Messvorrichtungen, die mit dem "primären" (1, 1') und/oder den "sekundären" (2a, 3a, 4a) Echtzeitsystem verbunden sind und/oder von einem mit dem "Web"-Server (5, 5') verbundenen Thin-Client (15) übertragen werden.

4. Computergestütztes System zur Überwachung des Produktionsablaufs nach Anspruch 3, **dadurch gekennzeichnet, dass** die erste Zeitdatei (9), welche die Zeitinformationen enthält, an den Server (5, 5') in regelmäßigen Intervallen übertragen wird, um die besagten Zeitinformationen in einer zweiten, Zeitdatei (10) genannten Datei zu speichern.

5. Computergestütztes System zur Überwachung des Produktionsablaufs nach einem der Ansprüche 1 oder 2, **dadurch gekennzeichnet, dass** die erste Zeitdatei (9), welche die Zeitinformationen enthält, an den Server (5, 5') übertragen wird, wenn die besagte Datei (9) eine vorbestimmte kritische Größe erreicht, um die besagten Zeitinformationen in einer Zeitdatei (10) genannten Datei zu speichern.

6. Computergestütztes System zur Überwachung des Produktionsablaufs nach einem der Ansprüche 1 bis 3, **dadurch gekennzeichnet, dass** der Inhalt der zweiten Zeitdatei (10) des Servers (5, 5') in regelmäßigen Intervallen in einer Datenbank gespeichert wird.

7. Computergestütztes System zur Überwachung des Produktionsablaufs nach einem der Ansprüche 1 bis 3, **dadurch gekennzeichnet, dass** der Inhalt der zweiten Zeitdatei (10) des Servers (5, 5') in einer Datenbank (11) gespeichert wird, wenn die besagte Zeitdatei (10) eine vorbestimmte kritische Größe erreicht.

8. Computergestütztes System zur Überwachung des Produktionsablaufs nach einem der Ansprüche 4 oder 5, **dadurch gekennzeichnet, dass** nach Abschluss des Speichervorgangs des Inhalts der zweiten Zeitdatei (10) in der Datenbank (11) der besagte Inhalt der zweiten Zeitdatei (10) gelöscht wird, um das Speichern neuer Daten in der besagten zweiten Zeitdatei (10) zu ermöglichen.

9. Computergestütztes System zur Überwachung des Produktionsablaufs nach einem der Ansprüche 4 bis 6, **dadurch gekennzeichnet, dass**, wenn sich ein Clientrechner (6, 7, 8) mit dem Server (5, 5') verbindet, der besagte Server (5, 5') dem Clientrechner (6, 7, 8) Zeitinformationen in Form von "Web"-Sites aus der ersten Zeitdatei (9) und/oder der zweiten Zeitdatei (10) und/oder der Datenbank (11) zur Verfügung stellt.

10. Computergestütztes System zur Überwachung des Produktionsablaufs nach einem der Ansprüche 4 bis 7, **dadurch gekennzeichnet, dass** die Datenbank (11) auf einem "Intranet"-Server (12) gespeichert ist, der mit dem Server (5, 5') verbunden ist.

11. Computergestütztes System zur Überwachung des Produktionsablaufs nach einem der vorhergehenden Ansprüche, **dadurch gekennzeichnet, dass** der oder die Clientrechner (6, 7, 8) eine Applikation umfassen, die eine Bildschirmansicht und/oder eine "Web"-Site erzeugt, welche die vom Clientrechner (6, 7, 8) verlangten Informationen beinhalten.
